# EUROPÄISCHE PATENTANMELDUNG

(11) **EP 4 838 210 A1**
(43) Veröffentlichungstag der Anmeldung: **11.11.2026**
(21) Anmeldenummer: 25175164.0
(22) Anmeldetag: 08.05.2025
(51) Int. Cl.: G01N 23/046

(54) **VORRICHTUNG, RÖNTGENDETEKTOR UND VERFAHREN ZUR ZERSTÖRUNGSFREIEN BILDGEBUNG EINER INNEREN STRUKTUR EINES OBJEKTS MITTELS RÖNTGENSTRAHLUNG**

(71) Anmelder: Fraunhofer-Gesellschaft zur Förderung der angewandten Forschung e.V., 80686 München (DE)
(72) Erfinder: Müller, Dominik, 91058 Erlangen (DE); Dremel, Kilian, 91058 Erlangen (DE); Balles, Andreas, 91058 Erlangen (DE)
(74) Vertreter: König, Andreas Rudolf

(57) **Zusammenfassung**

Die Erfindung betrifft eine Vorrichtung zur zerstörungsfreien Bildgebung einer inneren Struktur eines zu untersuchenden Objekts mittels Röntgenstrahlung, umfassend eine Röntgenquelle, aufweisend ein Mittel zum Erzeugen eines Strahlenbündels zur Durchstrahlung eines zu untersuchenden Objekts, wobei ein zentraler Strahlengang des Strahlenbündels eine optische Achse definiert, einen von der Röntgenquelle beabstandet angeordneten Röntgendetektor mit einer Vielzahl von Detektorelementen zum Empfangen einer auf dem Strahlungsbündel basierenden Eingangsstrahlung, wobei jedes der Vielzahl von Detektorelementen eine Detektoroberfläche mit einer Hauptdetektionsrichtung umfasst, und eine Aufnahmeeinrichtung zum Aufnehmen des zu untersuchenden Objekts zwischen der Röntgenquelle und dem Röntgendetektor, wobei die Vorrichtung ausgebildet ist, um eine Relativbewegung des Objekts zum Röntgendetektor und/oder der Röntgenquelle zur abtastenden Bildgebung des Objekts herbeizuführen, wobei die Relativbewegung eine Bewegungskomponente entlang einer in Bezug zur optischen Achse senkrechten Ebene umfasst, wobei der Röntgendetektor ausgebildet ist, um für eine Messung an dem zu untersuchenden Objekt die Hauptdetektionsrichtungen bezüglich bis zu zweier Raumrichtungen gegeneinander geneigt und in Richtung der Röntgenquelle konvergierend bereitzustellen. Die Erfindung betrifft ferner einen Röntgendetektor für eine solche Vorrichtung sowie ein Verfahren zur zerstörungsfreien Bildgebung einer inneren Struktur eines zu untersuchenden Objekts.

## Beschreibung

Die Erfindung betrifft eine Vorrichtung, einen Röntgendetektor sowie ein Verfahren zur zerstörungsfreien Bildgebung einer inneren Struktur eines Objekts mittels Röntgenstrahlung. Manche Ausführungsbeispiele beziehen sich auf ein Röntgen-Laminographiesystem unter dem Einsatz eines auf die Kegelstrahlgeometrie abgestimmten sphärischen Detektorsystems zur schnellen großflächigen Untersuchung flacher ausgedehnter Proben.

Die zerstörungsfreie Untersuchung von Bauteilen und Materialien mittels Röntgenstrahlung spielt in vielen technischen Bereichen eine zentrale Rolle. Sie ermöglicht es, innere Strukturen und Defekte sichtbar zu machen, ohne das Untersuchungsobjekt zu beschädigen. Besonders in der Halbleitertechnik, bei der Fertigung von Mikroprozessoren und Speicherchips, ist eine Qualitätssicherung auf höchstem Niveau essenziell. Hierbei müssen großflächige, dünne Proben wie beispielsweise Halbleiterwafer mit hoher Auflösung dreidimensional untersucht werden, um etwaige Defekte, Einschlüsse oder Strukturanomalien zuverlässig aufzuspüren. Sollen flache, ausgedehnte Proben - wie Wafer oder andere dünne Bauteile - unabhängig von der Größenskala dreidimensional mit Röntgenstrahlung untersucht werden, stößt die Technik der rotatorischen Computertomographie aufgrund ihrer Geometrielimitationen schnell an ihre Grenzen.

Bei großflächigen, dünnen Proben kommen stattdessen Verfahren zur Laminographie oder zur Tomosynthese zum Einsatz. Hierbei wird ein Untersuchungsobjekt senkrecht zu einer optischen Achse in einen beispielsweise kegelförmigen Strahl einer Röntgenquelle positioniert, und ein entstehendes Schattenwurfbild einer Röntgenabschwächung wird von einem flachen, parallel ausgerichteten Detektor aufgenommen. Durch Variation von Relativpositionen zwischen Quelle, Probe und Detektor werden Durchstrahlungsbilder der Probe unter verschiedenen Winkeln aufgenommen, und anschließend mit Software zu einem dreidimensionalen Volumendatensatz rekonstruiert (vgl. [1], [2] und [3]). Systeme dieser Art werden in den Druckschriften DE102010010723, US2023293128 A1 und US2022178851A1 offenbart.

Eine solche Winkelabtastung erfordert jedoch hochkomplexe mechanische Handhabungssysteme, die mit höheren Kosten, höheren Ausmaßen der Vorrichtung, längeren Inspektionszeiten, verringertem Durchsatz und sinkender Positioniergenauigkeit aufschlagen.

Besonders kritisch wird dies in industriellen Anwendungen, wo nicht nur hohe Bildauflösungen, sondern auch schnelle Prüfzyklen erforderlich sind, beispielsweise bei der Überprüfung von Lötstellen auf Leiterplatten. Bisherige Systeme zur Laminographie und/oder Tomosynthese sind durch die Notwendigkeit, großflächige Proben zu prüfen, in Geschwindigkeit und Auflösung stark begrenzt. Eine Möglichkeit, dem Entgegenzuwirken, bestünde theoretisch darin, ein Messfeld zu erhöhen. Als Messfeld oder Messbereich wird ein Bereich innerhalb der Probe verstanden, der bei einer einzelnen Messung vollständig und mit ausreichender Bildqualität durchstrahlt und detektiert werden kann. Das Messfeld in der Probe ist direkt abhängig von einer Größe des eingesetzten Detektors oder speziell von einem Pixelraster des Detektors. Ein Detektor mit einer doppelten Pixelanzahl erlaubt es, näherungsweise das doppelte Volumen in einer einzelnen Messung zu untersuchen. Pixel lassen sich jedoch nicht beliebig verkleinern, da deren Größe durch eine verwendete Technologie oder eine eingesetzte Röntgenstrahlcharakteristik, insbesondere eine Photonenenergie, vorgegeben ist. Daher kann eine Vergrößerung des Messfeldes effektiv nur durch eine physikalische Vergrößerung des Detektors selbst erreicht werden.

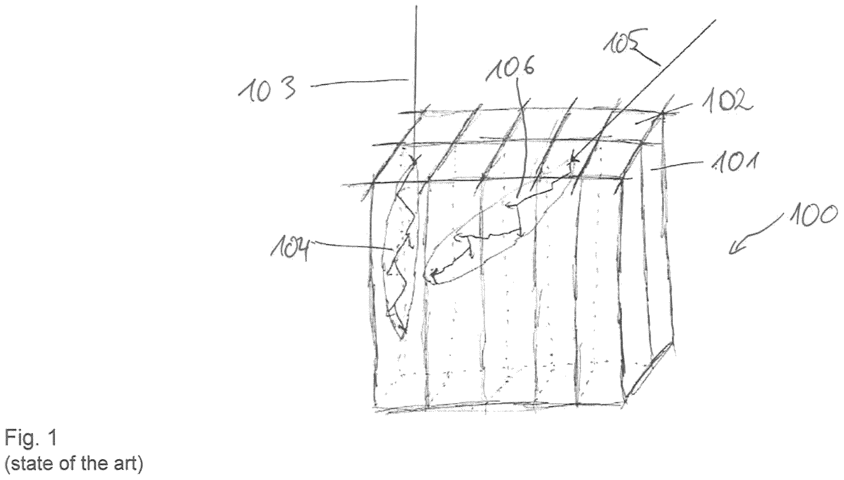

Bisherige Versuche, dieses Problem zu lösen, sind daran gescheitert, dass eine Vergrößerung des Detektors gravierende Nachteile mit sich zieht. So erfolgt bei zunehmender Ausdehnung des Detektors die Bestrahlung von Detektorpixeln, die sich weiter außerhalb der optischen Achse befinden, unter einem mit wachsendem Abstand zunehmend von der Lotrechten abweichenden Einfallswinkel. Detektoren sind so ausgelegt, dass eine Bestrahlung der Pixel optimalerweise lotrecht zu einer Detektionsfläche erfolgen sollte. Je flacher der Einfallswinkel eines Photons ist, desto größer ist ein Bereich in einer sensitiven Schicht des Detektors, der von dem Photon angeregt wird. Ein auftreffendes Photon, welches im Idealfall nur von einem einzelnen Detektorpixel gemessen werden sollte, kann so fälschlicherweise von mehreren benachbarten Pixeln als mehrere Photonen niedrigerer Energie gezählt werden. Dieser Effekt wird nachstehend anhand von Fig. 1 erläutert.

Fig. 1 zeigt eine schematische Darstellung eines Pixelaufbaus einer sensitiven Fläche eines direktkonvertierenden Röntgendetektors und mehrere erzeugte Ladungswolken 104, 106, anhand derer eine auftreffende Röntgenstrahlung 103, 105 detektierbar ist. Bei dem Röntgendetektor 1 handelt es sich um einen flachen, ausgedehnten Röntgendetektor 1, wie er bei der Laminographie und/oder der Tomosynthese herkömmlicherweise verwendet wird. Der Röntgendetektor 100 umfasst eine Vielzahl von Detektorpixeln 101. Die Detektorpixel 101 weisen jeweils eine Pixeloberfläche 102 auf, die einer nicht dargestellten Röntgenquelle zugewandt ist und zum Empfangen von sich von der Röntgenquelle ausbreitenden Röntgenstrahlen 103, 105 vorgesehen ist. Ein exemplarisch dargestelltes lotrecht einfallendes Photon eines ersten Röntgenstrahls 103 erzeugt eine sich nahezu lotrecht zur Pixeloberfläche 102 erstreckende erste Ladungswolke 104 in dem getroffenen Detektorpixel 101. Diese erste Ladungswolke 104 wird vom Detektor 100 als einzelnes Photon erkannt und gezählt. Ein exemplarisch dargestelltes zweites Photon eines zweiten Röntgenstrahls 105 trifft in einem abflachenden Einfallswinkel auf das Detektorpixel 101 auf. Ein solch schräger Einfallswinkel ergibt sich beispielsweise im Randbereich des Röntgendetektors 1 bei sich kegelförmig ausbreitenden Röntgenstrahlen. Eine vom zweiten Photon 105 erzeugte zweite Ladungswolke 106 erstreckt sich räumlich über mehrere Detektorpixel 101. Das zweite Photon 105 kann vom Detektor 100 nicht korrekt ausgewertet werden und wird fälschlicherweise mehrfach gewertet. Durch diesen Effekt nimmt die Auflösung in den Randbereichen des Detektors ab, was die Bildqualität der Durchstrahlungsbilder deutlich beeinträchtigt.

Dieser Effekt wird erheblich dadurch verstärkt, dass in Röntgendetektoren für eine Erkennung höherenergetischer Röntgenstrahlung die Detektorpixel in der sensitiven Schicht ein sehr hohes Aspektverhältnis von einer Länge einer Pixelkante zur Dicke der Sensorschicht aufweisen. Insbesondere moderne photonenzählende und direktkonvertierende Detektoren sind hiervon betroffen.

Dies führt im Ergebnis dazu, dass beim Einsatz großer Detektoren die Auflösung der Messung in den Außenbereichen mit zunehmender Detektorgröße immer weiter abnimmt. Die Vergrößerung des Messfeldes ist bei Beibehaltung einer gewünschten Auflösung daher nur begrenzt möglich.

In der Praxis bedeutet dies, dass Messdaten aus den Randbereichen des Detektors nicht verwendet werden, da sie eine unzureichende Bildqualität aufweisen. Dies wiederum reduziert die effektiv nutzbare Fläche des Detektors, sodass eine Vergrößerung des Messfeldes nicht möglich ist und eine höhere Anzahl von Abtastungen erforderlich ist, um alle Bereiche der Probe zu untersuchen - ein erheblicher Nachteil hinsichtlich Prozesseffizienz, d.h. Zeit- und Energieverbrauch. Insgesamt besteht aufgrund obenstehender Problematik ein ständiger Zielkonflikt zwischen hoher Bildauflösung und Prozesseffizienz durch Geschwindigkeit.

Ausgehend vom Stand der Technik besteht die Aufgabe der Erfindung darin, eine Materialprüfung zur zerstörungsfreien, hochauflösenden Untersuchung innerer Strukturen von großflächigen, dünnen Objekten, insbesondere Halbleiterwafern, hinsichtlich Präzision und/oder Effizienz zu verbessern. Es soll insbesondere vermieden werden, dass durch schrägen Einfall von Röntgenstrahlung auf große Detektorflächen Auflösungseinbußen entstehen, die zu einer ineffizienten Nutzung der Detektorfläche und zu einem erhöhten Aufwand an Abtastungen führen. Ziel ist es daher nicht nur eine über die gesamte Detektorfläche hinweg möglichst hohe Bildqualität zu ermöglichen, sondern zusätzlich auch die Prozesseffizienz zu verbessern, indem die Anzahl der notwendigen Abtastungen verringert wird.

Die Aufgabe der Erfindung wird gelöst durch die Gegenstände der unabhängigen Patentansprüche.

Zur Lösung der Aufgabe wird eine Vorrichtung zur zerstörungsfreien Bildgebung einer inneren Struktur eines zu untersuchenden Objekts mittels Röntgenstrahlung bereitgestellt. Die Vorrichtung umfasst eine Röntgenquelle, aufweisend ein Mittel zum Erzeugen eines Strahlenbündels zur Durchstrahlung eines zu untersuchenden Objektes, wobei ein zentraler Strahlengang des Strahlenbündels eine optische Achse definiert, einen von der Röntgenquelle beabstandet angeordneten Röntgendetektor mit einer Vielzahl von Detektorelementen zum Empfangen einer auf dem Strahlungsbündel basierenden Eingangsstrahlung, wobei jedes der Vielzahl von Detektorelementen eine Detektoroberfläche mit einer Hauptdetektionsrichtung umfasst, und eine Aufnahmeeinrichtung zum Aufnehmen des zu untersuchenden Objektes zwischen der Röntgenquelle und dem Röntgendetektor, wobei die Vorrichtung ausgebildet ist, um eine Relativbewegung des Objekts zum Röntgendetektor und/oder der Röntgenquelle zur abtastenden Bildgebung des Objektes herbeizuführen, wobei die Relativbewegung eine Bewegungskomponente entlang einer in Bezug zur optischen Achse senkrechten Ebene umfasst, wobei der Röntgendetektor ausgebildet ist, um für eine Messung an dem zu untersuchenden Objekt die Hauptdetektionsrichtungen bezüglich bis zu zweier Raumrichtungen gegeneinander geneigt und in Richtung der Röntgenquelle konvergierend bereitzustellen.

Ein Kerngedanke der Erfindung ist es, erkannt zu haben, dass eine konvergierende Ausrichtung der Hauptdetektionsrichtungen in Richtung der Röntgenquelle eine Optimierung eines Einfallswinkels mit sich zieht. Die Bereitstellung von in zwei Raumrichtungen zueinander geneigten Detektionsrichtungen kommt dabei insbesondere bei einer kegelförmigen Strahlgeometrie vorteilhaft zu tragen, da bei der Kegelstrahlgeometrie Photonen in einem Streuwinkel kegelförmig von der Röntgenquelle ausgestrahlt werden. Die Optimierung des Einfallwinkels ermöglicht es, die Detektorfläche zu vergrößern, ohne dass eine signifikante Verschlechterung der Bildschärfe und Ortsauflösung, insbesondere in den Randbereichen, eintritt. Die Vergrößerung des Detektors führt gleichzeitig zu einer Erweiterung des Messfeldes, sodass größere Volumenbereiche des Prüfobjekts mit einer einzigen Messung erfasst werden können. Es sind weniger Abtastungen zur vollständigen Erfassung der inneren Struktur des Objekts erforderlich, was eine Verkürzung des Prüfzyklus sowie eine Reduzierung des Energiebedarfs hierfür erlaubt. Gleichzeitig wird eine hohe Auflösung der erzeugten Volumendaten gewährleistet, sodass auch kleinere Defekte wie Haarrisse zuverlässig detektiert werden können. Die Geschwindigkeit der zerstörungsfreien Materialprüfung wird erheblich gesteigert, sodass sie bei industriellen Anwendungen wie der Laminographie und/oder Tomosynthese im Rahmen einer Halbleiterfertigung, wo ein Höchstmaß an Präzision und Geschwindigkeit erforderlich ist, einsetzbar ist. Der bei flachen Detektoren bisher vorherrschende Zielkonflikt zwischen hoher Auflösung und hoher Prozesseffizienz wird durch die vorgeschlagene Lösung wirksam überwunden.

Die Relativbewegung kann dabei insbesondere ausschließlich in einer lateralen Ebene erfolgen, die senkrecht zur optischen Achse ausgerichtet ist. Es kann jedoch auch Anwendungen geben, bei denen die Relativbewegung weitere Bewegungskomponenten aufweist, die insbesondere nicht senkrecht zur optischen Achse ausgerichtet sind. So ist nicht auszuschließen, dass die Relativbewegung in einer Ebene erfolgt, deren Flächennormale in einem verkippten Winkel zur optischen Achse steht, beispielsweise in einem Winkel von 0 bis 60 Grad.

Das Bereitstellen der geneigten Hauptdetektionsrichtungen kann auf verschiedene Art und Weise erfolgen. Nach einem Ausführungsbeispiel sind Mittel vorgesehen, um die Detektorelemente und deren Hauptdetektionsrichtung zu verstellen, und so zueinander geneigte Hauptdetektionsrichtungen bereitzustellen.

Gemäß einem besonders bevorzugten Ausführungsbeispiel definiert zumindest ein Teil der Detektorelemente eine Detektionsfläche, die zweidimensional gekrümmt ausgebildet ist und eine erste konkave Krümmung und eine orthogonale zweite konkave Krümmung aufweist. Die Krümmungen ermöglichen es, dass die Hauptdetektionsrichtungen der Detektorelemente bezüglich zweier Raumrichtung gegeneinander geneigt und in Richtung der Röntgenquelle konvergierend ausgerichtet bereitgestellt werden.

Gemäß einem Ausführungsbeispiel weisen die erste und die zweite Krümmung der Detektionsfläche jeweils einen konstanten Krümmungsradius auf. Man könnte auch sagen, dass die Krümmungen kreisbogenförmig ausgebildet sind, da die Krümmungsradien jeweils konstant sind.

Gemäß einem weiteren Ausführungsbeispiel sind die Krümmungsradien so gewählt, dass die Detektionsfläche sphärisch konkav gekrümmt ist. Das bedeutet, die Krümmungsradien der ersten Krümmung und der zweiten Krümmung sind identisch.

Gemäß einem Ausführungsbeispiel entspricht ein Krümmungsradius der Detektionsfläche einem Abstand des Röntgendetektors zu einem Brennfleck der Röntgenquelle. Insbesondere können die Detektorelemente sphärisch in Bezug auf den Brennfleck angeordnet sein. Der Brennfleck definiert einen Ursprung des Strahlenbündels, d.h. einen Punkt von dem sich das Strahlenbündel von der Röntgenquelle ausgehend in Richtung des Detektors ausbreitet.

Gemäß einem Ausführungsbeispiel erstreckt sich die Hauptdetektionsrichtung zumindest eines der Detektorelemente entlang einer Flächennormalen der Detektoroberfläche.

Ein weiterer Kerngedanke der Erfindung ist es, erkannt zu haben, dass eine sphärisch konkave Krümmung der Detektionsfläche eine optimale Anpassung an kegelförmige Strahlenbündel erlaubt. Handelt es sich bei der Hauptdetektionsrichtung um die Flächennormale der Detektoroberfläche, kreuzen sich die Flächennormalen aller Detektorelemente im Brennfleck. Vorteilhaft wird die Eingangsstrahlung von jedem Detektorelement lotrecht oder nahezu lotrecht empfangen werden. Der Detektor bietet damit vollflächig eine gleichhohe Auflösung und der bei flachen Detektoren vorherrschende Nachteil der schlechten Auflösung im Randbereich wird wirksam vermieden.

Gemäß einem Ausführungsbeispiel ist die Vielzahl der Detektorelemente durch ein zweidimensionales Array von Pixeln gebildet, und jedes der Detektorelemente weist zumindest ein Detektorpixel auf.

Gemäß einem Ausführungsbeispiel ist eine Krümmung der Detektionsfläche durch eine räumliche Anordnung der Detektorelemente zueinander ausgebildet, wobei die Krümmung kontinuierlich oder diskontinuierlich ausgebildet ist. Bei einer kontinuierlichen Krümmung kann die Detektionsfläche einen gleichmäßig gekrümmten Verlauf aufweisen, beispielsweise in Form einer sphärischen oder zylindrischen Wölbung. Bei einer diskontinuierlichen Krümmung hingegen setzt sich die Oberfläche aus mehreren abschnittsweise ebenen oder linear geneigten Teilflächen zusammen, die stufen- oder facettenartig angeordnet sind, sodass sie in ihrer Gesamtheit eine gekrümmte Gesamtform ergeben.

Entsprechend können Oberflächen der Detektorelemente selbst eine konkave Krümmung aufweisen oder auch eine flache Geometrie ausbilden. Im Falle eines sphärisch gekrümmten Detektors, kann entsprechend die Detektionsfläche eine echte sphärische Geometrie aufweisen oder auch dadurch angenähert werden, dass mehrere flache Detektorelemente kachelförmig so angeordnet werden, dass diese die sphärische Geometrie möglichst gut nachformen.

Gemäß einem Ausführungsbeispiel umfasst zumindest eines der Detektorelemente ein Detektorpixel mit einer konkav-gekrümmten Pixeloberfläche. Ein Krümmungsradius der konkav-gekrümmten Pixeloberfläche entspricht dabei vorzugsweise einem Krümmungsradius der Detektionsfläche. Durch diese Ausprägung kann eine kontinuierlich gekrümmte Detektionsfläche bereitgestellt werden.

Gemäß einem weiteren Ausführungsbeispiel umfasst zumindest eines der Detektorelemente zumindest ein oder mehrere Detektorpixel mit jeweils einer flachen Pixeloberfläche. Durch diese Ausprägung kann eine diskontinuierlich gekrümmte Detektionsfläche bereitgestellt werden. Das bedeutet, die Detektionsfläche besteht aus abschnittsweise geraden Pixeloberflächen, die entlang einer Krümmung räumlich angeordnet sind. Dabei können einzelne Pixel auf diese Weise räumlich nebeneinander angeordnet sein. Alternativ können Gruppen von Pixeln mit jeweils parallel zueinander ausgerichteten flachen Pixeloberflächen räumlich so aneinander angeordnet sein, dass sie gemeinsam die gekrümmte Detektionsfläche ausbilden.

Gemäß einem Ausführungsbeispiel ist eine Form der Pixeloberflächen rechteckig. Andere Formen sind jedoch nicht ausgeschlossen. So kann ein Detektorelement und/oder Detektorpixel auch eine abgerundete oder vieleckige Form aufweisen.

Ein weiterer Vorteil, der durch Ausführungsbeispiele der Erfindung, bereitgestellt wird, betrifft eine Ausgestaltung der Detektorpixel. Das Detektorpixel muss in aller Regel eine ausreichende Dicke aufweisen, um Röntgenphotonen mit hohen Energien vollständig zu erfassen und eine Durchstrahlung durch die Detektorschicht zu verhindern. Bei herkömmlichen flachen Detektoren würde es bei einem hohen Aspektverhältnis von Pixelbreite zu Pixeldicke zu einer Verstärkung des zuvor beschriebenen Problems der Auflösung in Randbereichen führen. Ausführungsbeispiele der Erfindung stellen sicher, dass ein hohes Aspektverhältnis verwendet werden kann, ohne Einbußen in der Auflösung in Randbereichen hinzunehmen. Das Aspektverhältnis von einer Pixelbreite eines Detektorpixels des Röntgendetektors zu einer Pixeldicke beträgt bevorzugt mindestens 1:5, vorzugsweise sogar mindestens 1:10.

Gemäß einem Ausführungsbeispiel umfasst der Röntgendetektor eine direktkonvertierende Schicht, die ausgelegt ist, die Röntgenstrahlung unmittelbar in ein elektrisches Signal umzuwandeln.

Gemäß einem Ausführungsbeispiel umfasst der Röntgendetektor eine Szintillatorschicht, die ausgebildet ist, um die Röntgenstrahlung in ein Lichtsignal umzuwandeln, sowie einen optischen Sensor, der ausgebildet ist, um das Lichtsignal in ein elektrisches Signal umzuwandeln, wobei der optische Sensor ein hyperzentrisches Objektiv und/oder eine an die Krümmung angepasste Anordnung von Lichtführungsleitern umfasst.

Gemäß einem Ausführungsbeispiel weist die Vorrichtung eine Manipulatoreinrichtung auf, die dazu ausgebildet ist, eine Relativposition zwischen der Röntgenquelle, dem Röntgendetektor und/oder dem Objekt zur abtastenden Durchstrahlung des Bereichs des Objekts aus verschiedenen Blickwinkeln und/oder zur Durchstrahlung verschiedener Bereiche des Objekts relativ zueinander zu verstellen.

Gemäß einem Ausführungsbeispiel ist die Manipulatoreinrichtung dazu ausgebildet, bei einer Verstellung einer Position der Strahlenquelle und/oder des Objekts relativ zum Röntgendetektor eine korrespondierende Verstellung des Röntgendetektors herbeizuführen oder umgekehrt, um die Hauptdetektionsrichtungen der Detektorelemente in Richtung der Röntgenquelle konvergierend auszurichten.

Gemäß einem Ausführungsbeispiel umfasst die Verstellung des Röntgendetektors eine Linearbewegung und eine Rotationsbewegung des Röntgendetektors relativ zum Objekt und/oder der Röntgenquelle.

Gemäß einem Ausführungsbeispiel weist die Vorrichtung eine Auswerteeinrichtung auf, die dazu eingerichtet ist, basierend auf elektrischen Signalen des Röntgendetektors ein Durchstrahlungsbild des Bereichs des Objekts zu erstellen.

Gemäß einem Ausführungsbeispiel ist die Auswerteeinrichtung dazu eingerichtet, mehrere Durchstrahlungsbilder, die auf Messungen aus verschiedenen Winkelperspektiven und/oder Messungen verschiedener Bereiche des Objekts basieren, zu einem 3D Volumendatensatz des Objekts zu rekonstruieren. Die vielen einzelnen Durchstrahlungsbilder werden insbesondere durch Relativbewegungen in einer Ebene senkrecht zur optischen Achse gewonnen. Durch diese Relativbewegungen wird jeder einzelne Bereich letztendlich auch aus verschiedenen Blickwinkeln aufgenommen. Anschließend werden die Durchstrahlungsbilder computertechnisch analysiert und ausgewertet, um zu dem 3D Volumendatensatz zusammengesetzt zu werden.

Die Aufgabe der Erfindung wird weiterhin gelöst durch einen Röntgendetektor für eine Vorrichtung zur zerstörungsfreien Bildgebung einer inneren Struktur eines zu untersuchenden Objekts mittels Röntgenstrahlung, wobei der Röntgendetektor eine Vielzahl von Detektorelementen zum Empfangen einer Röntgenstrahlung umfasst, wobei jedes der Vielzahl von Detektorelementen umfasst, die eine Detektionsfläche definieren, die eine zweidimensionale konkave Krümmung aufweist.

Gemäß einem Ausführungsbeispiel ist die Detektionsfläche sphärisch ausgebildet ist. Das bedeutet, die Detektionsfläche weist eine erste konkave Krümmung sowie eine zweite orthogonale Krümmung auf, deren Krümmungsradien konstant und identisch sind.

Ein solcher Röntgendetektor kann beispielsweise in einer Vorrichtung der zuvor beschrieben Art zur laminographischen Materialprüfung eingesetzt werden. Der Röntgendetektor ermöglicht es, dass größere Volumenbereiche des Objekts in einer einzelnen Messung prüfbar sind. Zudem weist er gegenüber flachen Detektoren eine verbesserten Auflösung in den Randbereichen auf.

Die Aufgabe wird zudem gelöst durch ein Verfahren zur zerstörungsfreien Bildgebung einer inneren Struktur eines zu untersuchenden Objekts, wobei das Verfahren umfasst:
- Erzeugen eines Strahlenbündels mittels einer Röntgenquelle,
- Durchstrahlen eines Bereichs des Objektes mittels des Strahlenbündels,
- Empfangen einer auf dem Strahlenbündel basierenden Eingangsstrahlung durch einen Röntgendetektor, wobei die Eingangsstrahlung durch sphärisch gekrümmt angeordnete und zu einem Brennfleck der Röntgenquelle gerichtet angeordnete Detektorelemente im Wesentlichen lotrecht auf Pixel des Röntgendetektors empfangen wird.

Das Verfahren kann insbesondere das Verwenden einer zuvor beschriebenen Vorrichtung. Das Verfahren kann insbesondere zur Laminographie und/oder Tomosynthese verwendet werden. Vorteilhafte Ausführungen des Verfahrens entsprechen denen der Vorrichtung.

Besonders bevorzugte Ausführungsformen der vorliegenden Erfindung werden nachfolgend Bezug nehmend auf die beiliegenden Zeichnungen erläutert. Es zeigen:
- Fig. 1: eine schematische Darstellung eines flach ausgebildeten Detektors, nach dem Stand der Technik;
- Fig. 2: eine schematische Darstellung einer Vorrichtung gemäß einem Ausführungsbeispiel;
- Fig. 3a: eine schematische Schnittdarstellung eines Röntgendetektors gemäß einem Ausführungsbeispiel;
- Fig. 3b: eine schematische Schnittdarstellung eines Röntgendetektors gemäß einem Ausführungsbeispiel; und
- Fig. 4: schematisch ein Ablaufdiagramm eines Verfahrens gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

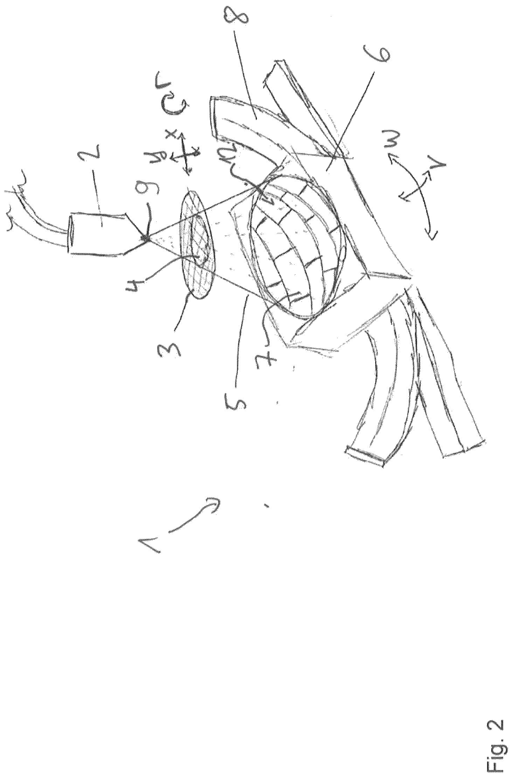

Fig. 2 zeigt eine schematische Darstellung einer Vorrichtung 1 zur zerstörungsfreien Bildgebung einer inneren Struktur eines zu untersuchenden Objekts 3 mittels Röntgenstrahlung gemäß einem Ausführungsbeispiel. Es handelt sich um eine Vorrichtung, die insbesondere zur Laminographie und/oder Tomosynthese vorgesehen ist.

Die Vorrichtung 1 umfasst eine Röntgenquelle 2, welche zur Erzeugung eines sich ausgehend von einem Brennfleck 9 kegelförmig ausbreitenden Strahlenbündels 5 vorgesehen ist. Das Strahlenbündel 5 durchstrahlt einen Bereich 4 des Objekts 3 und trifft auf einen Röntgendetektor 6 auf.

Die Vorrichtung 1 umfasst eine nicht dargestellte Aufnahmeeinrichtung, die das Objekt 3 zwischen der Röntgenquelle 2 und dem Röntgendetektor 6 hält. Die Aufnahmeeinrichtung kann einen Greifer, einen Messtisch, eine Bodenfläche oder eine andere geeignete Einrichtung umfassen, die ausgebildet ist, um das Objekt 3 zu halten, zu stützen und/oder zu fixieren. Die Aufnahmeeinrichtung kann an das Objekt 3 angepasst sein, wobei dies nicht erforderliche ist. Jedoch kann es vorteilhaft sein, eine Anpassung an das Objekt vorzunehmen, etwa um mechanische Beschädigungen am Objekt 3 zu vermeiden.

Das Objekt 3 kann bspw. ein Halbleiterwafer sein oder diesen umfassen. In einer derartigen Ausführung kann die Aufnahmeeinrichtung bspw. einen Chuck, eine Gabelstruktur oder dergleichen umfassen. Anders gestaltet es sich bei anderen Objekten bspw. in einer anderen Größenordnung, etwa wenn große Objekt wie bspw. Flügel von Windkraftanlagen, insbesondere umfassend laminierte Faserverbundwerkstoffe, zu untersuchen sind. In derartigen Fällen kann die Aufnahmeeinrichtung anders ausgestaltet sein. Anders ausgedrückt ist die vorliegende Erfindung weder auf eine Beschaffenheit noch auf eine Größe des Objekts 3 beschränkt.

Die Vorrichtung 1 umfasst zudem eine Manipulatoreinrichtung 8, welche dazu vorgesehen ist, eine Relativposition zwischen der Röntgenquelle, dem Röntgendetektor und/oder dem Objekt zur abtastenden Durchstrahlung des Bereichs 4 des Objekts 3 aus verschiedenen Blickwinkeln und/oder zur Durchstrahlung verschiedener Bereiche 4 des Objekts 3 relativ zueinander zu verstellen, einzustellen oder abzuändern. Die hier dargestellte Manipulatoreinrichtung 8 ist dazu ausgebildet, die Relativbewegung bezüglich dreier Freiheitsgrade auszuführen. Die Freiheitsgrade umfassen beispielsweise eine Verschiebung bezüglich der Achsen y, x und eine Rotation bezüglich der Achse r.

Die hier exemplarisch dargestellte Manipulatoreinrichtung 8 ist dazu ausgebildet, Schwenkbewegungen des Detektors 6 herbeizuführen, welche entlang zweier gekrümmter Richtungen v, w geführt sind. Andere nicht dargestellte Verstellmöglichkeiten sind durch die Erfindung nicht ausgeschlossen.

Der Röntgendetektor 6 weist eine Vielzahl von kachelförmigen Detektorelementen 7 auf. Die Detektorelemente 7 definieren eine Detektionsfläche 12, die sich räumlich entlang einer ersten konkaven Krümmung und einer orthogonalen zweiten Krümmung erstreckt. Man kann auch sagen, dass die Detektionsfläche 12 zweidimensional gekrümmt ausgebildet ist, wobei die Krümmungen der Detektionsfläche 12 durch eine räumliche Anordnung der Detektorelemente 7 zueinander realisiert ist. Durch die Krümmungen in zwei Dimensionen sind Hauptdetektionsrichtungen H der Detektorelemente 7 bezüglich zweier Raumrichtungen gegeneinander geneigt. Da die Krümmungen konkav sind, sind die Hauptdetektionsrichtungen H in Richtung des Brennflecks 9 konvergierend ausgerichtet.

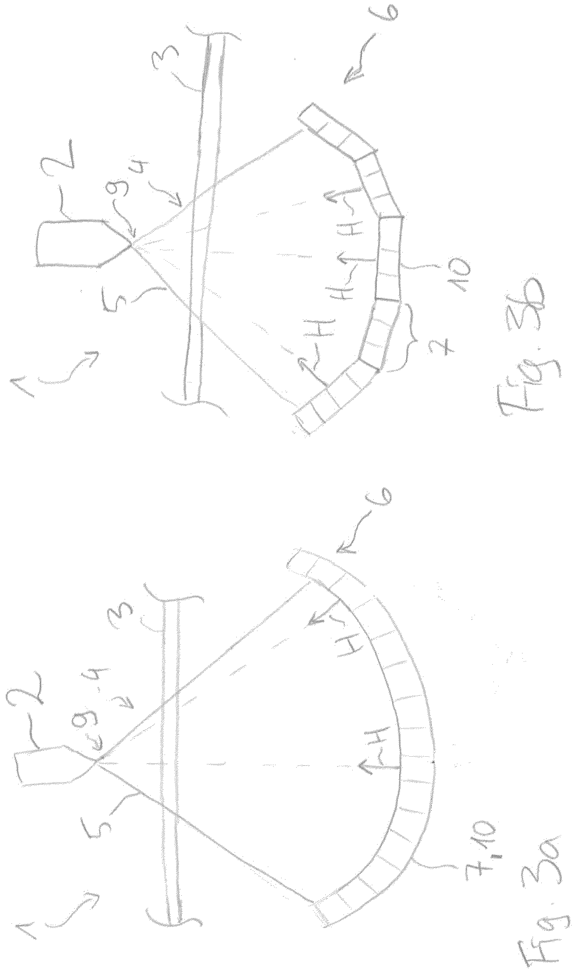

Die Detektorelemente 7 weisen ein oder mehrere Detektorpixel 10 aufweisen, wie in Fig. 3a und Fig. 3b veranschaulicht ist. Fig. 3a zeigt eine schematische Schnittdarstellung der Vorrichtung 1, wobei die Manipulatoreinrichtung 8 nicht dargestellt ist. Zu sehen ist, eine Ausführungsform, bei der ein Detektor 6 mehrere Detektorelemente 7 mit einem Detektorpixel 10 umfasst. Die Detektorpixel 10 weisen jeweils eine Pixeloberfläche 13 auf, die konkav gekrümmt ist. Die Detektionsfläche 12 ist in diesem Ausführungsbeispiel kontinuierlich gekrümmt.

Durch die Pixeloberfläche 12 wird eine Hauptdetektionsrichtung H des Detektorpixels 10 definiert. In der dargestellten Ausführungsform ist die Hauptdetektionsrichtung eine Flächennormale der Pixeloberfläche 12. Der Röntgendetektor 6 ist so ausgebildet, dass die Hauptdetektionsrichtung H jedes Detektorpixels 10 gegeneinander geneigt und in Richtung der Röntgenquelle 2, insbesondere des Brennflecks 9, konvergierend ausgerichtet sind.

Fig. 3b zeigt ein alternatives Ausführungsbeispiel, bei dem ein Detektor 6 mehrere Detektorelemente 7 mit jeweils mehreren Detektorpixeln 10 umfasst. Die Detektorpixel 10 weisen jeweils eine flach ausgebildete Pixeloberfläche 13 auf. Die Pixeloberflächen 13 der Detektorpixel 10 des jeweiligen Detektorelementes 7 sind parallel zueinander ausgerichtet. Der Röntgendetektor 6 dieses Ausführungsbeispiels ist so ausgebildet, dass die Hauptdetektionsrichtungen H der Detektorpixel 10 jeweils eines Detektorelementes 7 parallel zueinander sind, wobei die Hauptdetektionsrichtung H der Detektorpixel 10 verschiedener Detektorelemente wiederum gegeneinander geneigt und in Richtung der Röntgenquelle 2, insbesondere des Brennflecks 9, konvergierend ausgerichtet sind.

Durch beide Ausführungsformen werden Strahlen des kegelförmigen Strahlenbündels 5 zumindest von einem Teil der Detektorpixel 10 im Wesentlichen lotrecht empfangen. Dadurch setzt der Detektor 6 eine Winkelabtastung des kegelförmigen Strahlenbündels 5 bestmöglich um und hat speziell gegenüber ausschließlich flachen Detektoren technologisch erhebliche Vorteile in der Laminographie und/oder Tomosynthese.

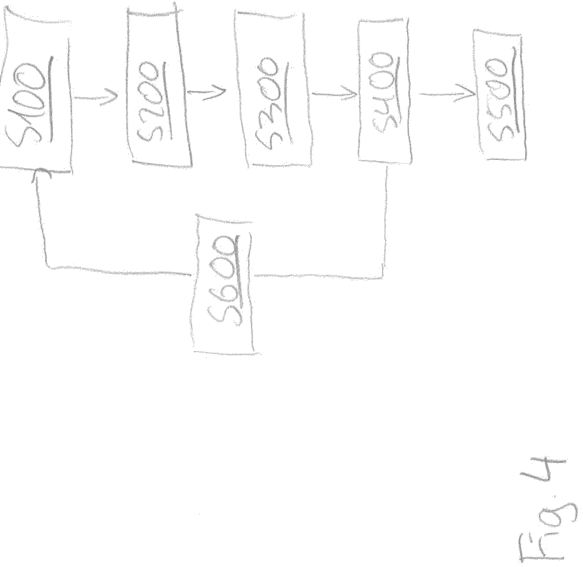

Im Folgenden wird ein Verfahren zur zerstörungsfreien Bildgebung einer inneren Struktur eines zu untersuchenden Objekts mittels der beschriebenen Vorrichtung 1 unter Zuhilfenahme der Fig. 4 beschrieben.

Fig. 4 zeigt schematisch ein Ablaufdiagramm des Verfahrens gemäß eines Ausführungsbeispiels. In einem ersten Schritt des Verfahrens wird das Strahlenbündel 5 mittels der Röntgenquelle 2 erzeugt S100 und der Bereich 4 des Objekts 3 durchstrahlt S200. Durch den Röntgendetektor 6 wird eine auf dem Strahlenbündel 5 basierende Eingangsstrahlung empfangen S300. Dabei wird die Eingangsstrahlung durch die sphärisch gekrümmt angeordneten und zu dem Brennfleck 9 der Röntgenquelle 2 gerichtet angeordneten Detektorelemente 7 im Wesentlichen lotrecht empfangen.

Basierend auf elektrischen Signalen des Röntgendetektors 6 wird zunächst ein Durchstrahlungsbild des jeweils durchstrahlten Bereichs 4 erzeugt S400. Aus mehreren Durchstrahlungsbildern, die Messdaten unterschiedlicher Bereiche 4 des Objekts 3 enthalten, wird anschließend ein dreidimensionaler Volumendatensatz rekonstruiert S500. Die dafür benötigten Durchstrahlungsbilder werden durch wiederholte Durchführung der Schritte S100 bis S400 an jeweils anderen Bereichen 4 des Objekts 3 gewonnen. Diese Messung verschiedener Objektbereiche 4 erfolgt durch ein relatives Verstellen S600 des Objekts 3 zur optischen Achse der Röntgenquelle 2 - relativ zum Detektor 6 und/oder zur Röntgenquelle selbst. Sobald eine ausreichende Anzahl an Aufnahmen vorliegt, wird der vollständige 3D-Volumendatensatz in Schritt S500 erstellt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (1) zur zerstörungsfreien Bildgebung einer inneren Struktur eines zu untersuchenden Objekts (3) mittels Röntgenstrahlung, umfassend
eine Röntgenquelle (2), aufweisend ein Mittel zum Erzeugen eines Strahlenbündels (5) zur Durchstrahlung eines zu untersuchenden Objekts (3), wobei ein zentraler Strahlengang des Strahlenbündels (5) eine optische Achse definiert,
einen von der Röntgenquelle (2) beabstandet angeordneten Röntgendetektor (6) mit einer Vielzahl von Detektorelementen (7) zum Empfangen einer auf dem Strahlungsbündel (5) basierenden Eingangsstrahlung, wobei jedes der Vielzahl von Detektorelementen (7) eine Detektoroberfläche mit einer Hauptdetektionsrichtung (H) umfasst, und
eine Aufnahmeeinrichtung zum Aufnehmen des zu untersuchenden Objekts (3) zwischen der Röntgenquelle (2) und dem Röntgendetektor (6),
wobei die Vorrichtung (1) ausgebildet ist, um eine Relativbewegung des Objekts (3) zum Röntgendetektor (6) und/oder der Röntgenquelle (2) zur abtastenden Bildgebung des Objekts (3) herbeizuführen, wobei die Relativbewegung eine Bewegungskomponente entlang einer in Bezug zur optischen Achse senkrechten Ebene umfasst,
wobei der Röntgendetektor (6) ausgebildet ist, um für eine Messung an dem zu untersuchenden Objekt (3) die Hauptdetektionsrichtungen (H) bezüglich bis zu zweier Raumrichtungen gegeneinander geneigt und in Richtung der Röntgenquelle (2) konvergierend bereitzustellen.

2. Vorrichtung (1) nach Anspruch 1, **dadurch gekennzeichnet, dass** zumindest ein Teil der Detektorelemente (7) eine Detektionsfläche (12) definiert, die zweidimensional gekrümmt ausgebildet ist und eine erste konkave Krümmung und eine orthogonale zweite konkave Krümmung aufweist.

3. Vorrichtung (1) nach Anspruch 2, **dadurch gekennzeichnet, dass** die erste und die zweite Krümmung der Detektionsfläche (12) jeweils einen konstanten Krümmungsradius aufweisen.

4. Vorrichtung (1) nach Anspruch 2 oder 3, **dadurch gekennzeichnet, dass** die Krümmungsradien so gewählt sind, dass die Detektionsfläche (12) sphärisch konkav gekrümmt ist.

5. Vorrichtung (1) nach einem der Ansprüche 2 bis 4, **dadurch gekennzeichnet, dass** ein Krümmungsradius der Detektionsfläche (12) einem Abstand des Röntgendetektors (6) zu einem Brennfleck der Röntgenquelle (2) entspricht.

6. Vorrichtung (1) nach einem der vorangehenden Ansprüche, **dadurch gekennzeichnet, dass** die Hauptdetektionsrichtung (H) zumindest eines der Detektorelemente (7) sich entlang einer Flächennormalen der Detektoroberfläche erstreckt.

7. Vorrichtung (1) nach einem der vorangehenden Ansprüche, **dadurch gekennzeichnet, dass** die Vielzahl der Detektorelemente (7) durch ein zweidimensionales Array von Detektorpixeln (10) gebildet ist, und jedes der Detektorelemente (7) zumindest ein Detektorpixel (10) aufweist.

8. Vorrichtung (1) nach einem der vorangehenden Ansprüche, **dadurch gekennzeichnet, dass** eine Krümmung der Detektionsfläche (12) durch eine räumliche Anordnung der Detektorelemente (7) zueinander ausgebildet ist, wobei die Krümmung kontinuierlich oder diskontinuierlich ausgebildet ist.

9. Vorrichtung (1) nach einem der vorangehenden Ansprüche, **dadurch gekennzeichnet, dass** zumindest eines der Detektorelemente (7) ein Detektorpixel (10) mit einer konkav-gekrümmten Pixeloberfläche umfasst.

10. Vorrichtung (1) nach einem der vorangehenden Ansprüche, **dadurch gekennzeichnet, dass** zumindest eines der Detektorelemente (7) zumindest Detektorpixel (10) mit einer flachen Pixeloberfläche umfasst.

11. Vorrichtung (1) nach einem der vorangehenden Ansprüche, **dadurch gekennzeichnet, dass** der Röntgendetektor (6) eine direktkonvertierende Schicht umfasst, die ausgelegt ist, die Röntgenstrahlung unmittelbar in ein elektrisches Signal umzuwandeln.

12. Vorrichtung (1) nach einem der vorangehenden Ansprüche, **dadurch gekennzeichnet, dass** der Röntgendetektor (6) eine Szintillatorschicht umfasst, die ausgebildet ist, um die Röntgenstrahlung in ein Lichtsignal umzuwandeln, sowie einen optischen Sensor, der ausgebildet ist, um das Lichtsignal in ein elektrisches Signal umzuwandeln, wobei der optische Sensor ein hyperzentrisches Objektiv und/oder eine an die Krümmung angepasste Anordnung von Lichtführungsleitern umfasst.

13. Vorrichtung (1) nach einem der vorangehenden Ansprüche, **dadurch gekennzeichnet, dass** die Vorrichtung (1) eine Manipulatoreinrichtung (8) aufweist, die dazu ausgebildet ist, eine Relativposition zwischen der Röntgenquelle (2), dem Röntgendetektor (6) und/oder dem Objekt (3) zur abtastenden Durchstrahlung eines Bereichs (4) des Objekts (3) aus verschiedenen Blickwinkeln und/oder zur Durchstrahlung verschiedener Bereiche (4) des Objekts (3) relativ zueinander zu verstellen.

14. Vorrichtung (1) nach Anspruch 12, **dadurch gekennzeichnet, dass** die Manipulatoreinrichtung (8) dazu ausgebildet ist, bei einer Verstellung einer Position der Röntgenquelle (2) und/oder des Objekts (3) relativ zum Röntgendetektor (6) eine korrespondierende Verstellung des Röntgendetektors (6) herbeizuführen oder umgekehrt, um die Hauptdetektionsrichtungen (H) der Detektorelemente (7) in Richtung der Röntgenquelle (2) konvergierend auszurichten.

15. Vorrichtung (1) nach Anspruch 12 oder 13, **dadurch gekennzeichnet, dass** die Verstellung des Röntgendetektors (6) eine Linearbewegung und eine Rotationsbewegung des Röntgendetektors (6) relativ zum Objekt (3) und/oder der Röntgenquelle (2) umfasst.

16. Vorrichtung (1) nach einem der vorangehenden Ansprüche, **dadurch gekennzeichnet, dass** die Vorrichtung (1) eine Auswerteeinrichtung aufweist, die dazu eingerichtet ist, basierend auf elektrischen Signalen des Röntgendetektors (6) ein Durchstrahlungsbild des Bereichs (4) des Objekts (3) zu erstellen.

17. Vorrichtung (1) nach Anspruch 15, **dadurch gekennzeichnet, dass** die Auswerteeinrichtung dazu eingerichtet ist, mehrere Durchstrahlungsbilder, die auf Messungen aus verschiedenen Winkelperspektiven und/oder Messungen verschiedener Bereiche des Objekts (3) basieren, zu einem 3D Volumendatensatz des Objekts (3) zu rekonstruieren.

18. Verfahren zur zerstörungsfreien Bildgebung einer inneren Struktur eines zu untersuchenden Objekts (3), wobei das Verfahren umfasst:
- Erzeugen (S100) eines Strahlenbündels (5) mittels einer Röntgenquelle (2),
- Durchstrahlen (S200) eines Bereichs (4) des Objektes (3) mittels des Strahlenbündels (5),
- Empfangen (S300) einer auf dem Strahlenbündel (5) basierenden Eingangsstrahlung durch einen Röntgendetektor (6), wobei die Eingangsstrahlung durch sphärisch gekrümmt angeordnete und zu einem Brennfleck (9) der Röntgenquelle (2) gerichtete Detektorelemente (7) im Wesentlichen lotrecht empfangen wird.
